(19) Europäisches Patentamt
European Patent Office
Office européen des brevets

(11) **EP 3 143 367 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(21) Anmeldenummer: **15723488.1**

(22) Anmeldetag: **13.05.2015**

(51) Int Cl.:
**G01B 21/04** (2006.01) **G01B 9/02** (2006.01)

(86) Internationale Anmeldenummer:
**PCT/EP2015/060678**

(87) Internationale Veröffentlichungsnummer:
**WO 2015/173346 (19.11.2015 Gazette 2015/46)**

(54) **VERFAHREN ZUR KALIBRIERUNG EINES MESSGERÄTES**

METHOD FOR CALIBRATING A MEASURING DEVICE

PROCÉDÉ D'ÉTALONNAGE D'UN INSTRUMENT DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.05.2014 DE 102014209040**

(43) Veröffentlichungstag der Anmeldung:
**22.03.2017 Patentblatt 2017/12**

(73) Patentinhaber: **Carl Mahr Holding GmbH**
**37073 Göttingen (DE)**

(72) Erfinder:
• **BAER, Goran**
**10247 Berlin (DE)**
• **PRUSS, Christof**
**73760 Ostfildern (DE)**
• **OSTEN, Wolfgang**
**70569 Stuttgart (DE)**

(74) Vertreter: **Rüger Abel Patentanwälte PartGmbB**
**Patentanwälte**
**Webergasse 3**
**73728 Esslingen a. N. (DE)**

(56) Entgegenhaltungen:
WO-A1-02/084209 DE-A1-102006 057 606
US-A- 5 636 025 US-A1- 2005 166 413

• **JAN LIESNER: "Zum Einsatz räumlicher Lichtmodulatoren in der interferometrischen Wellenfrontmesstechnik", BERICHTE AUS DEM INSTITUT FÜR TECHNISCHE OPTIK DER UNIVERSITÄT STUTTGART, Bd. 55, 24. November 2006 (2006-11-24), Seiten 39-41, XP002743453, STUTTGART ISBN: 3923560540 in der Anmeldung erwähnt**

**Beschreibung**

Die vorliegende Erfindung betrifft ein Verfahren nach dem Oberbegriff der unabhängigen Ansprüche. Ein solches Verfahren ist aus der Dissertation "Zum Einsatz räumlicher Lichtmodulatoren in der interferometrischen Wellenfrontmesstechnik", J. Liesener, Universität Stuttgart, 2006 und auch aus der DE 10 2006 057 606 B4 für ein Interferometer als Messgerät bekannt.

Die hier vorgestellte Erfindung ist jedoch nicht auf Interferometer beschränkt, sondern auch bei anderen Messgeräten verwendbar, bei denen verschiedene Punkte eines Prüfvolumens angefahren werden, um dort ein oder mehrere Messsignale zu erzeugen. Das Prüfvolumen ist dabei die Menge aller anfahrbaren Punkte, in denen Messsignale erzeugt werden können. Beispiele solcher Messgeräte sind deflektometrische Messgeräte und taktile Messgeräte (Koordinatenmessgeräte). Solche Punkte werden im Folgenden auch als Messpositionen bezeichnet.

WO 02/084209 A1 beschreibt eine Kalibrierung eines Messsystems mit einem in einem Messarm, der an seinem Ende ein Tastelement zum Antasten eines zu messenden Objekts trägt. Der Messarm hat eine Basis, die in einem Raum verschiebbar auf einem Boden angeordnet ist. Wenn sich die Position der Basis ändert, muss das Messsystem kalibriert werden, um die am Objekt angetasteten Messpunkte einem gegenüber dem Raum ortsfesten Koordinatensystem zuordnen zu können. Dazu sind eine Vielzahl von Referenzpunkten am Boden, den Wänden und der Decke des Raumes vorhanden. Der Boden, die Wände und die Decke sind nicht exakt rechtwinkelig zueinander ausgerichtet. Durch Antasten von jeweils 3 Referenzpunkten am Boden, einer der Wände und der Decke des Raumes kann die Position des Tastelements im Raum ermittelt werden.

US 2005/166413 A1 offenbart eine Koordinatenmessvorrichtung.

In Bezug auf Interferometer werden in dieser Anmeldung sogenannte klassische oder herkömmliche Interferometer und sogenannte Tilted-Wave-Interferometer voneinander unterschieden. Das Tilted-Wave-Interferometer (TWI) ist ein Messgerät zur Vermessung optisch glatter asphärischer und Freiform-Flächen, welches anders als herkömmliche Interferometer nicht mit nur einer Prüfwelle (die von einer einzelnen Lichtquelle ausgeht), sondern mit einer Vielzahl von gegeneinander verkippten Prüfwellen arbeitet, die von verschiedenen Lichtquellen ausgehen.

Zur Kalibrierung eines TWI werden beim Gegenstand der DE 10 2006 057 606 B4 verschiedene, in einem Prüfvolumen dieses Messgerätes liegende und durch Orts- und/oder Winkelkoordinaten auszeichnungsbare Punkte mit endlicher Genauigkeit und damit Positionierfehler-behaftet angefahren. Die Punkte sind insofern mit Koordinaten auszeichnungsbar, als das für die Zuweisung von Werten der Koordinaten bei späteren Messprozessen erforderliche Koordinatensystem erst durch die Kalibrierung definiert wird. In den jeweiligen Punkten werden jeweils Messsignale erzeugt, und es werden Parameter eines Rechenmodells des Messgeräts aus den Messsignalen und den Orts- und/oder Winkelkoordinaten bestimmt.

Interferometer werden unter anderem zur Vermessung von optisch glatten Flächen verwendet. Eine optisch glatte Fläche ist dabei eine spiegelnd reflektierende Grenzfläche oder eine glatte, lichtbrechende Grenzfläche eines transparenten Objekts.

Bei der interferometrischen Vermessung solcher Grenzflächen wird eine Prüfwelle (Objektwelle) und eine zu dieser Prüfwelle kohärente Referenzwelle erzeugt. Die Prüfwelle und die Referenzwelle werden bevorzugt aus kohärentem Licht ein und derselben Lichtquelle erzeugt, was zum Beispiel mit Hilfe eines Strahlteilers erfolgt. Die Prüfwelle wird an der Grenzfläche reflektiert oder gebrochen und anschließend auf einem Detektor, beispielsweise einem lichtempfindlichen Chip einer Kamera, mit einer Referenzwelle überlagert, die keine Wechselwirkung mit dem Objekt erfahren hat oder wie beispielsweise bei der Shearing Interferometrie eine bekannt modifizierte Kopie der Prüfwelle ist. Die optischen Weglängen, die beide Wellen bis zur Überlagerung auf dem Detektor durchlaufen, hängen von Einflüssen der jeweiligen Strahlführung im Interferometer und dem Einfluss des Objektes auf die Prüfwelle ab. Das resultierende Interferenzbild ist insofern unerwünscht mehrdeutig. Das Ziel einer Kalibrierung ist hier die Eliminierung des Einflusses der Strahlführung des Interferometers.

Um diesen Einfluss eliminieren zu können, ist es bekannt, zu vermessende Objekte (Prüflinge) in sogenannten Nulltestkonfigurationen zu vermessen, welche die Strahlen so anpassen, dass sie wieder senkrecht auf den Prüfling treffen, oder mit sehr genau bekannten Masterflächen zu vergleichen. Die Anpassung erfolgt zum Beispiel durch ein CGH oder durch eine refraktive Kompensationsoptik. Die Einflüsse der Strahlführung treten dann sowohl bei der Masterfläche als auch bei dem Prüfling in identischer Form auf und lassen sich daher bei der Auswertung prinzipiell durch eine Differenzbildung eliminieren. Die bei einer solchen Auswertung übrigbleibenden Weglängenunterschiede bilden dann nur noch die Abweichungen des Prüflings von der Masterfläche ab. Diese Art der Kalibrierung wird auch als Nulltest bezeichnet und eignet sich insbesondere für sphärische Prüflinge, da sphärische Masterflächen mit vergleichsweise geringem Aufwand bereitgestellt werden können.

Nulltests an Asphären erfordern spezielle, an die Gestalt der Asphären angepasste refraktive oder diffraktive Optiken, was wegen des damit verbundenen Herstellungsaufwands unerwünscht ist.

Das eingangs genannte, bekannte Verfahren kommt ohne solche Masterflächen aus. Die Kalibrierung basiert dort auf einer Beschreibung des interferometrischen Messgeräts als Black-Box-Rechenmodell. Dieses Rechenmodell erfordert eine genaue Kenntnis der optischen Wege im Interferometer. Dieses Modell, beziehungsweise diese Beschreibung des Interferometers in Form des Black-Box-Rechenmodells ermöglicht eine Berechnung der zwischen Lichtquelle und Detektor liegenden optischen Weglänge (optical path length, OPL) für jeden denkbaren Lichtstrahl, der das Prüfvolumen durchläuft und dabei an dem zu messenden Objekt reflektiert, gebeugt oder gebrochen wird.

Für die Berechnung der OPL werden diese Weglängen durch mehrdimensionale Polynome beschrieben. Die als Modellparameter dienenden Polynomkoeffizienten werden zunächst für ein ideales Interferometer berechnet. Abweichungen (Aberrationen) des realen Interferometers von dem idealen Interferometer werden durch mit einem bekannten Kalibrierobjekt durchgeführte Messungen bestimmt, und die berechneten Polynomkoeffizienten werden damit kalibriert. Unter einer Kalibrierung wird hier eine Anpassung der Koeffizienten verstanden, die so erfolgt, dass die OPL im realen Interferometer durch die mehrdimensionalen Polynome mit angepassten Koeffizienten korrekt berechenbar sind. Das Ziel der Kalibrierung besteht demnach darin, die Polynomkoeffizienten so zu bestimmen, dass diese eine möglichst genaue Beschreibung der optischen Wege im realen Interferometer erlauben. Dabei wird das Kalibrierobjekt an mehreren Stellen (Messpositionen) im Prüfvolumen gemessen, und die Black-Box-Parameter (d.h. die Polynomkoeffizienten) des realen Interferometers werden daraus in einem Optimierungsverfahren bestimmt.

Nach Abschluss der Kalibrierung ist es mit Hilfe des Black-Box-Rechenmodells möglich, sämtliche optischen Wege im Interferometer korrekt zu berechnen. Durch die Kenntnis der Polynomkoeffizienten ergibt sich eine Beschreibung des Interferometers, die es für jeden denkbaren Lichtstrahl im Prüfvolumen erlaubt, die optische Weglänge (OPL) von der Quelle bis zum Detektor zu berechnen, wenn der Einfluss des zu prüfenden Objekts bekannt ist. Damit kann der Einfluss des Interferometers auf das Messergebnis bestimmt und in der Folge rechnerisch eliminiert werden.

Um bei der Kalibrierung die Black-Box-Parameter bestimmen zu können, muss das mit dem Optimierungsverfahren zu lösende Optimierungsproblem eindeutig definiert sein. Das heißt, dass einerseits nur so viele Freiheitsgrade für die Optimierung zur Verfügung stehen dürfen, dass keine Mehrdeutigkeiten entstehen, also nicht derselbe Zustand mit unterschiedlichen Parametersätzen beschrieben werden kann.

Es müssen aber andererseits auch genügend Freiheitsgrade vorhanden sein, sodass der Algorithmus die Möglichkeit hat, die korrekte Lösung zu finden, und diese Lösung muss innerhalb des zur Verfügung stehenden Lösungsraums erreichbar sein. Der Lösungsraum ist dabei die Menge aller möglichen Werte der Black-Box-Parameter, beziehungsweise der Polynomkoeffizienten.

Außerdem muss die Information, welche als Eingangsdatensatz für die Kalibrierung dient, so gewählt werden, dass es nur eine mögliche, nämlich nur die physikalisch relevante Lösung gibt. Andernfalls besteht die Gefahr, dass anstelle der physikalisch korrekten Lösung ein anderes lokales Minimum gefunden wird. Das bisherige Kalibrierverfahren weist hier einige Mängel auf, die zu fehlerhaften Kalibrierungen führen können.

Die Aufgabe der vorliegenden Erfindung besteht vor diesem Hintergrund darin, das eingangs genannte Verfahren weiter zu verbessern.

Diese Aufgabe wird mit den Merkmalen des Anspruchs 1 gelöst.

Die erfindungsgemäße Lösung sieht vor, dass ein oder mehrere Kalibrierobjekte verwendet werden, die an unterschiedlichen, vorzugsweise weit auseinanderliegenden Positionen im Prüfvolumen verwendet werden können. Beispielsweise können zwei Kalibrierobjekte verwendet werden, die gekrümmte Flächen mit unterschiedlich großen Krümmungsradien aufweisen. Ein anderes Beispiel wäre die Verwendung eines computergenerierten Hologramms, das mehrere, unterschiedlich gekrümmte Wellenfronten erzeugt. Ein weiteres Beispiel wäre eine bekannte Asphäre oder Freiformfläche.

Durch die zusätzlichen Kalibrierobjekte kann gewährleistet werden, dass die korrekte Lösung gefunden wird und das Messergebnis keinen Skalierungsfehler aufweist.

Dabei kann sich die Erfindung von dem bekannten Verfahren auch dadurch unterscheiden, dass ein Koordinatensystem, auf welches sich die Koordinaten der Punkte des Prüfvolumens beziehen, aus fehlerbehaftet angefahrenen Messpositionen definiert wird, indem exakt sechs Koordinaten von drei oder mehr Messpositionen vorbestimmte Koordinatenwerte zugewiesen werden. Dies können beispielsweise die drei Ortskoordinaten in x, y und z einer ersten Messposition an der Nominalposition 0;0;0 (zur Illustration einheitenlos) sein, weiterhin die x- und y-Koordinate an einer zweiten Messposition mit der Nominalposition 0;0;1 und der y-Koordinate an einer dritten Messposition mit den nominellen Koordinaten 1;0;0.

Das bekannte Verfahren hat zwar auch bereits Nebenbedingungen für die Koordinaten von Messpunkten verwendet; diese Koordinaten waren dort jedoch als freie Variable im Lösungsraum der Kalibrierung enthalten.

Im Gegensatz dazu werden die sechs vorbestimmten Koordinatenwerte bei der vorliegenden Erfindung nicht mehr als Variablen, sondern als Konstanten betrachtet. Durch diese Zuweisung wird das Koordinatensystem mit einer Messunsicherheit von Null und damit eindeutig bestimmt.

Als Vorteil der neuen Lösung ergibt sich zum Beispiel bei einem Interferometer eine deutlich bessere, d.h. weniger stark als beim Stand der Technik eingeschränkte Konvergenz der Kalibrierung. Dies ist insbesondere dann der Fall, wenn durch Justagefehler im Aufbau eine Kippung in der Prüfwellenfront enthalten ist. Diese ist oft nicht direkt erkennbar, da sie von der Referenzwelle kompensiert werden kann.

Der Unterschied zur bisherigen TWI-Kalibrierung ist, dass die Nebenbedingungen des Gleichungssystems, welche das globale Koordinatensystem definieren, geändert wurden.

Der Unterschied der hier vorgestellten Kalibrierung zur Kalibrierung eines klassischen Interferometers ist, dass sie das komplette Interferometer mit Hilfe eines Black-Box-Rechenmodells beschreibt. Dieses ist nicht nur für Strahlen im Nulltest gültig, sondern für beliebige OPL durch das Interferometer, was zu einer erhöhten Messgenauigkeit sowie reduzierten Anforderungen an die Justage führt.

Die Erfindung erlaubt, wie bereits der Gegenstand der DE 10 2006 057 606 B4, eine Kalibrierung eines Tilted-Wave-Interferometers oder auch eines herkömmlichen, flächenhaft messenden Interferometers, das mit nur einer Prüfwelle arbeitet, wobei die Erfindung ohne nur mit Masterflächen durchführbare Nulltests auskommt.

Mit anderen Worten: Der Vorteil des bekannten Verfahrens, dass die bei der Kalibrierung verwendeten Kalibrierobjekte sich von den Messobjekten, die später mit dem kalibrierten Interferometer vermessen werden sollen, unterscheiden dürfen, bleibt bei der neuen Kalibrierung erhalten. Die Kalibrierobjekte müssen insbesondere nicht die unter Umständen nur mit großem Aufwand herzustellenden, Messobjekt-individuellen Masterflächen aufweisen.

Im Fall des TWI ist diese (neue) Art der Kalibrierung die einzig bekannte Möglichkeit, um die Funktion des Geräts mit der geforderten Genauigkeit zu gewährleisten. Dies ist ein wesentlicher Vorteil gegenüber dem Gegenstand der DE 10 2006 057 606 B4. Im Falle eines herkömmlichen Interferometers ohne gekippte Prüfwellen liegt der Vorteil der erfindungsgemäßen Kalibrierung gegenüber einer klassischen Null-test Kalibrierung, die beispielsweise mit einem Dreistellungstest [E., Jensen A.: Absolute Calibration Method for Twyman-Green Wavefront Testing Interferometers, J. Opt. Soc. Am 63 (1973), S. 1313A] oder Random-Ball-Test erfolgt, darin, dass die Kalibrierung nicht nur für Strahlen im Null-Test sondern auch für Strahlen, die davon abweichen, gültig ist. Dies ermöglicht das Eliminieren von Retrace-Fehlern im Messergebnis, sodass eine höhere Genauigkeit bei gleichzeitig geringeren Anforderungen an die Prüflingsjustage erzielt werden kann und auch schwache Asphären gemessen werden können.

Bei der bekannten Kalibrierung eines klassischen Interferometers wird eine Referenzfläche im Interferometer gemessen, um daraus auf die optischen Weglängen durch das System zu schließen. Dies ist notwendig, um diese von den Weglängenänderungen, die durch den Prüfling entstehen, zu unterscheiden. Gewünscht ist, dass sich nur die letzteren in dem Messsignal abbilden. Hier wird davon ausgegangen, dass alle Strahlen auf dem Weg zum Prüfling und von dort zurück, denselben Weg durch das Interferometer nehmen. Diese Näherung gilt jedoch nur für Prüflinge, die im Null-Test gemessen werden, sehr genau justiert sind und nur geringe Abweichungen von ihrer Sollform aufweisen. Unterschiede in den Strahlverläufen zwischen Hinweg und Rückweg bilden die bereits genannten Retracefehler.

Im Unterschied dazu arbeitet die vorliegende Erfindung mit einer Beschreibung des kompletten Interferometers durch Black-Box-Rechenmodelle. Diese Modelle sind nicht nur für Strahlen im Nulltest gültig, sondern sie gelten für beliebige Strahlen durch das Interferometer, was zu einer erhöhten Messgenauigkeit sowie reduzierten Anforderungen an die Justage führt. Das erfindungsgemäße Verfahren erlaubt bei der Kalibrierung klassischer Interferometer als Messgerät eine Berechnung und damit auch eine rechnerische Korrektur der Retracefehler, welche durch die Abweichung von der Nulltest-Konfiguration entstehen. Dies ermöglicht die Messung leichter Asphären oder Freiformen im Nicht-Nulltest, es entspannt die Genauigkeitsanforderungen der Justage und ermöglicht das Messen von Flächen mit höherer Abweichung von der Sollform.

Der Vorteil zum bisherigen TWI-Kalibrierverfahren ist, dass eine weitaus bessere Konvergenz erreicht werden kann. Die Konvergenz der bekannten Kalibrierung ist nur für Systeme gewährleistet, welche so genau justiert sind, dass die verbleibenden Abweichungen vom Sollzustand im gesamten System und für alle Lichtquellen kleiner als fünf Wellenlängen sind.

Außerdem können aufgrund des eingeschränkten Parameterraums Aberrationen nicht mit mittleren Frequenzen kalibriert werden, wodurch die Genauigkeit der Kalibrierung insgesamt verschlechtert wird. Mit dem neuen hier vorgestellten Kalibrieransatz ist eine weitaus bessere Konvergenz erreichbar. Zum einen können so auch Systeme, welche nicht so gut justiert sind, kalibriert werden. Aus Simulationen geht hervor, dass noch Abweichungen bis zum Fünfzigfachen der Wellenlänge und noch darüber hinaus kalibriert werden können, wodurch die Justage deutlich einfacher zu handhaben ist. Des Weiteren kann bei einer Modellierung des Interferometers mit Hilfe von Black-Boxes, bei denen die innerhalb des Interferometers auftretenden optischen Weglängen durch Polynome beschrieben werden, die Polynomordnung der Black-Boxes erhöht werden, sodass eine genauere Kalibrierung erreicht werden kann.

Eine weitere erfindungsgemäße Ausgestaltung zeichnet sich dadurch aus, dass wenigstens ein Teil der bei der Kalibrierung verwendeten Kalibrierobjekte und Messpositionen so vorbestimmt sind, dass ein in Wechselwirkung des Lichtes mehrerer Lichtquellen mit einem Kalibrierobjekt erzeugtes Messsignal des Flächendetektors Beiträge mehrerer Lichtquellen aufweist, und dass die Messpositionen im Prüfvolumen Knotenpunkte eines gedachten, zusammenhängenden Graphen darstellen, der aus Knoten und Kanten besteht, wobei zwei Knotenpunkte genau dann durch eine gedachte Kante verbunden sind, wenn in den Messsignalen, die in den zwei Knoten erzeugt werden, Beiträge aus wenigstens einer gemeinsamen Lichtquelle enthalten sind und außerdem jede Lichtquelle der Lichtquellen wenigstens einen Beitrag zu einem Messsignal liefert, zu dem auch wenigstens eine weitere Lichtquelle einen Beitrag liefert, und dass sich ein Messsignal des Flächendetektors, der mehrere Einzeldetektoren aufweist, aus Signalbeiträgen von mehreren Einzeldetektoren zusammensetzt, und dass die Messpositionen im Prüfvolumen Knotenpunkte eines gedachten, zusammenhängenden Graphen darstellen, der aus Knoten und Kanten besteht, wobei zwei Knotenpunkte genau dann durch eine gedachte Kante verbunden sind, wenn in den Messsignalen, die in den zwei Knoten erzeugt werden, Signalbeiträge aus wenigstens einem gemeinsamen Einzeldetektor enthalten sind und außerdem jeder Einzeldetektor des Flächendetektors wenigstens einen Beitrag zu einem Messsignal liefert. Bevorzugt ist, dass zu dem Messsignal wenigstens ein weiterer Einzeldetektor einen Beitrag liefert, und außerdem jeder Einzeldetektor einen Beitrag zu einem Messsignal liefert, zu dem auch wenigstens ein weiterer Einzeldetektor einen Beitrag liefert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen, jeweils in schematischer Form:

Figur 1     ein Interferometer als Ausführungsbeispiel einer erfindungsgemäßen Messvorrichtung;

Figur 2     ein Koordinatensystem, das bei einer erfindungsgemäßen Kalibrierung durch sechs Nebenbedingungen festgelegt wird;

Figur 3     einen Vergleich des Konvergenzverhaltens einer erfindungsgemäßen Kalibrierung und einer bekannten Kalibrierung;

Figur 4     den Verlauf eines Hauptstrahls in dem Messgerät der Figur 1 bei idealen Bedingungen; und

Figur 5     den Verlauf eines vergleichbaren Hauptstrahls bei einer nicht ideal positionierten Lichtquelle und einer kompensierenden Verschiebung des Messobjekts.

Im Folgenden wird die Erfindung unter Bezug auf ein Interferometer als Beispiel eines Messgeräts beschrieben, das mit dem erfindungsgemäßen Verfahren kalibrierbar ist. Wie bereits erwähnt worden ist, kann die Erfindung aber auch zur Kalibrierung anderer Messgeräte verwendet werden, wobei auch dort ein mit endlicher Genauigkeit und damit positionierfehler-behaftet erfolgendes Anfahren von verschiedenen, in einem Prüfvolumen des Messgerätes liegenden und durch Orts- und/oder Winkelkoordinaten auszeichnungsbaren Punkten erfolgt und Messsignale in den jeweiligen Punkten erzeugt werden und Parameter eines Rechenmodells des Messgeräts aus den Messsignalen und den Orts- und/oder Winkelkoordinaten bestimmt werden. Beispiele solcher Messgeräte sind weiter oben genannt worden.

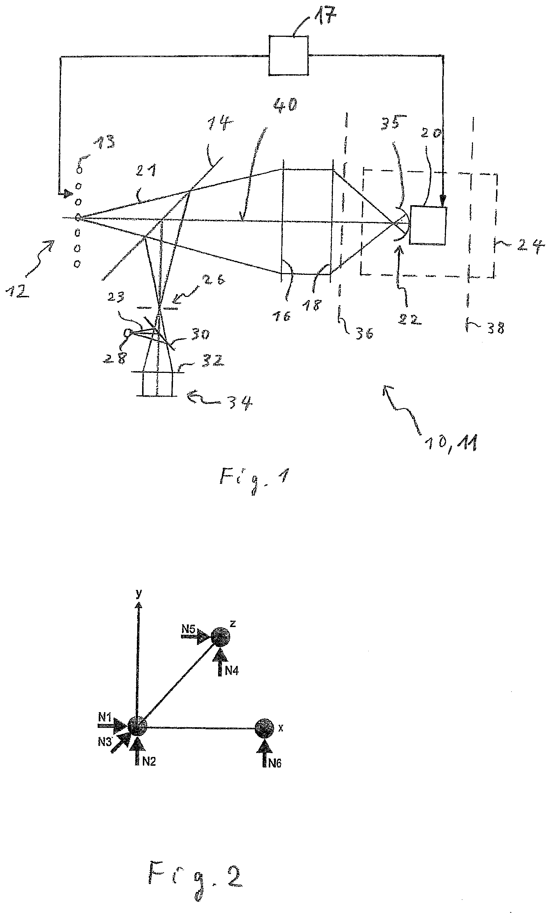

Das in der Figur 1 dargestellte Messgerät 10 ist ein Interferometer, das ein Punktlichtquellenarray 12 aus Lichtquellen 13, einen Strahlteiler 14, einen Kollimator 16, ein Objektiv 18, eine Positioniereinheit 20 zum Verfahren eines Messobjekts bzw. Kalibrierobjekts 22 in einem Prüfvolumen 24 des Interferometers, eine Blende 26, eine Referenzlichtquelle 28, einen weiteren Strahlteiler 30, eine Abbildungsoptik 32 und einen Detektor 34 in Form einer lichtempfindliche Pixel aufweisenden Kamera aufweist. Das für die Kalibrierung verwendete Messobjekt wird als Kalibrierobjekt bezeichnet.

Bei der Kalibrierung wird die Differenz der optischen Weglängen verschiedener Strahlen 21, 23 von Quellen 13, 28, interferometrisch gemessen, um Eingangsdaten für die Kalibrierung zu erhalten. Um das gesamte Prüfvolumen zu kalibrieren, wird hierfür das Kalibrierobjekt, das bevorzugt eine Kalibrierkugel 35 oder ein Planspiegel ist, mit Hilfe der Positioniereinheit 20 im Prüfvolumen verfahren und an verschiedenen Orten vermessen. Die Positioniereinheit, welche für das Anfahren der Kalibrierpositionen verwendet wird, weist eine endliche, absolute Positioniergenauigkeit im Raum auf. Diese liegt typischerweise im Bereich von mehr als einem Mikrometer, was ca. zwei Zehnerpotenzen über der geforderten Genauigkeit für die Kalibrierung liegt.

Eine deutlich höhere Positioniergenauigkeit wäre mit hohem technischem Aufwand verbunden und auch aus Kostengründen nicht erwünscht. Dies führt dazu, dass in jeder Kalibriermessung neben der Information, welche für die Kalibrierung des Messsystems verwendet wird, immer auch ein Anteil enthalten ist, welcher durch die Fehlpositionierung entstanden ist.

Damit ergibt sich eine unerwünschte Mehrdeutigkeit. Um das System trotzdem vollständig kalibrieren zu können ist es notwendig, zwischen den Systemaberrationen, die kalibriert werden sollen, und dem Einfluss der Fehlpositionierung zu unterscheiden. Das heißt, dass die bei der Kalibrierung verwendeten Algorithmen als Zwischenergebnis auch die Fehlpositionierung der Kalibrierkugel 35 berechnen müssen, um deren Einfluss korrekt berücksichtigen zu können.

Zu diesem Zweck wird der Positionierungsfehler als zusätzlicher Freiheitsgrad in die Kalibrierung aufgenommen, was bereits durch die oben genannte Dissertation bekannt ist. Die gemessenen optischen Weg längen OPL$_{gesamt}$ werden dabei durch die folgende Gleichung beschrieben:

$$OPL_{gesamt}(M, N, m, n) = W_Q(M, N, X, Y) + W_Q(m, n, x, y) + W_Q(\delta sx, \delta sy, \delta sz) \quad (1)$$

Dabei ist M, N die Ortskoordinate auf dem Quellenarray 12, m, n die Ortskoordinate auf der Kamera 34, X, Y eine Ortskoordinate (Feldwinkel) auf einer Quellenbezugsebene 36, x, y eine Ortskoordinate einer Pixelbezugsebene 38, und die $\delta sx$, $\delta sy$, $\delta sz$ sind Werte der Fehlpositionierung einer als Kalibrierobjekt verwendeten Kalibrierkugel. Für die Kalibrierung werden mehrere Messungen an verschiedenen Positionen durchgeführt. Hierbei werden die Positionen der Kalibrierkugel 35 so gewählt, dass das komplette Prüfvolumen, also beide Referenzebenen (also Werte x, y und X, Y) in allen Feldwinkeln (d.h. Werte m, n und M, N) abgedeckt werden.

Dies kann zum Beispiel so erreicht werden, dass für jede Quelle 13 die Kalibrierkugel 35 einmal im Nulltest positioniert wird und dann in einem zweiten Schritt etwas defokussiert positioniert wird. In der Nulltest-Position wird die komplette Quellenbezugsebene 36 abgedeckt. Im defokussierten Fall wird die komplette Pixelbezugsebene 38 abgedeckt, wodurch gewährleistet ist, dass es für alle Bereiche Informationen gibt.

Die Kalibrierung erfolgt über die Lösung eines Optimierungsproblems. Als Ergebnis erhält man die Parameter welche das System beschreiben, sowie die Positionierungsfehler, mit denen das Kalibrierobjektwährend der Kalibrierung positioniert wurde.

Dies funktioniert allerdings nur, wenn alle Variablen des Systems linear unabhängig voneinander sind und keine linearen Abhängigkeiten zu Positionierungsfehlern aufweisen. Dies ist jedoch im Normalfall nicht gegeben.

Ein erster Nachteil der bisherigen Lösung für die Kalibrierung des Tilted-Wave-Interferometers ergibt sich aus dem für die Kalibrierung verwendeten Bezugssystem. Die bekannte Kalibrierung beschreibt die Aberrationen des Interferometers mit Hilfe zweier Black-Boxes, welche auf den zwei ReferenzEbenen 36, 38 im Prüfvolumen definiert sind.

Die Weglänge eines Strahles, der die Quellenbezugsebene 36 kreuzt, hängt von den für ihn gültigen Werten von M, N, X, Y ab und kann entsprechend durch eine von diesen vier Variablen abhängige Funktion, insbesondere durch ein vierdimensionales Polynom beschrieben werden. Die Funktion ist insofern auf der Quellenbezugsebene definiert.

Analog dazu hängt die Weglänge eines Strahles, der die Pixelbezugsebene 38 kreuzt, von den für ihn gültigen Werten von m, n, x, y ab und kann entsprechend durch eine von diesen vier Variablen abhängige Funktion, insbesondere durch ein vierdimensionales Polynom beschrieben werden. Die Funktion ist insofern auf der Pixelbezugsebene definiert.

Diese Funktionen mit den möglichen Werten der jeweils vier Parameter stellen jeweils ein Rechenmodell für diese Weglängen dar, das vom realen Aufbau des Interferometers weitgehend unabhängig ist. Diese Rechenmodelle werden insofern in der vorliegenden Anmeldung jeweils als Black-Box-Rechenmodell bezeichnet.

Um das Koordinatensystem, auf welches sich die Kalibrierung bezieht, zu definieren, ist es notwendig, die Lage der Ebenen 36, 38 mit dem physikalisch existierenden Interferometer in Bezug zu setzen. In der bisherigen Lösung wurde dies durch sechs zusätzliche Nebenbedingungen im Gleichungssystem erreicht. Dabei definieren drei Nebenbedingungen die Fehlpositionierung der Kalibrierkugel als Kalibrierobjekt in der Messposition im Nulltest der Quelle auf der optischen Achse zu Null. Dies legt den Ursprung des Koordinatensystems in den Mittelpunkt dieser Kalibrierkugel zum Zeitpunkt der Kalibrierung. Die Position dieser Kalibrierkugel wird dabei interferometrisch justiert, so dass sie sehr genau auf der optischen Achse liegt. Die Position des Kalibrierobjektes wird häufig und so auch im Folgenden als Kugelposition bezeichnet.

Neben den drei Translationen müssen die drei Rotationen definiert werden. Für die Definition der Rotation wurden bisher die Kippterme der Wellenfronten der zentralen

Quelle auf der optischen Achse in X- und Y-Richtung auf einen Sollwert definiert, um die Rotation um die Y- und X-Achse zu definieren. Für die Rotation um Z wurde die lineare Abhängigkeit des Kippterms in Y-Richtung von der Quellenposition in X-Richtung auf den nominellen Wert (Sollwert) definiert.

Der Nachteil dieser bekannten Lösung ist eine eingeschränkte Konvergenz der Kalibrierung. Dies ist insbesondere dann der Fall, wenn durch Justagefehler im Aufbau eine Kippung in der Prüfwellenfront enthalten ist. Diese ist oft nicht direkt erkennbar, da sie von der Referenzwelle kompensiert werden kann.

Die vorliegende Erfindung sieht im Unterschied dazu das Folgende vor: Um das Koordinatensystem zu definieren, werden, wie in der bisherigen Lösung, sechs Nebenbedingungen N1 bis N6 in das Gleichungssystem eingefügt.

Figur 2 zeigt ein hier linkshändiges kartesisches Koordinatensystem, das durch sechs Nebenbedingungen N1 bis N6 festgelegt wird. Die z-Richtung liegt dabei in Richtung der optischen Achse 40 aus der Figur 1.

Für die drei Translationen in x-, y- sowie z-Richtung wird dafür die erste Kugelposition, welche sich im Nulltest der Quelle auf der optischen Achse 40 befindet, in allen drei Translationsrichtungen fixiert, indem den Koordinaten dieser Position jeweils ein definierter Wert, bevorzugt der Wert Null, zugewiesen wird. Dazu wird der Soll-Ort, der bevorzugt dem Koordinatenursprung entspricht, mit dem Kalibrierobjekt 22 angefahren, was jedoch nur mit einer beschränkten Genauigkeit erfolgen kann. Diese erste Kugelposition liegt bevorzugt auf der optischen Achse des Interferometers, die hier mit der z-Achse des Koordinatensystems zusammenfällt. Prinzipiell ist dies auch bei jeder anderen Kugelposition möglich, jedoch wird bevorzugt die erste Kugelposition gewählt, da diese interferometrisch positioniert wird und somit relativ genau auf der optischen Achse liegt.

In diesem zunächst angefahrenen und zwangsläufig mit einem Positionsfehler behafteten Punkt im Prüfvolumen werden die Abweichungen von der Soll-Position zu Null definiert, indem den x-, y- und z-Koordinaten dieses Punktes jeweils ein vorbestimmter Wert, bevorzugt jeweils der Wert Null, zugewiesen wird. Dies geschieht durch die Nebenbedingungen N1 für die x-Richtung, die Nebenbedingung N2 für die y-Richtung, und die Nebenbedingung N3 für die z-Richtung. Da das Positioniersystem sich aufgrund von thermischen Einflüssen ausdehnt, entsteht zusätzlich zum zufälligen Positionierungsfehler auch noch eine Drift, welche im Lauf der Kalibrierung zunimmt. Somit wäre das Prüfvolumen beim Wählen einer anderen Messposition, welche erst später angefahren wird, um den Betrag dieser Drift verschoben, was eine Kippung im Messergebnis zur Folge hätte. Um die drei rotatorischen Freiheitsgrade zu eliminieren, werden zwei weitere Positionen, an denen das Kalibrierobjekt vermessen wird, eingeführt. Diese werden, um die Drift möglichst gering zu halten, direkt nach der ersten Messung am Anfang der Kalibrierung aufgenommen. Die erste der beiden weiteren Positionen befindet sich ebenfalls auf der optischen Achse, ist aber im Vergleich zur ersten Messposition defokussiert.

Unter einer Defokussierung wird dabei eine Verschiebung in Richtung der optischen Achse 40 verstanden. Die Position (Kugelposition) des Kalibrierobjekts 22 wird in dieser Messung über die Nebenbedingung N5 in x-Richtung und die Nebenbedingung N4 in y-Richtung fixiert, bleibt aber in z-Richtung frei. Dadurch wird das Koordinatensystem in seiner Rotation um die x- und y-Achse fixiert. Aufgrund der Positionierungsfehler der Positionierungseinheit ist die Ausrichtung der Achsen zwar bei jeder Kalibrierung zufällig leicht gedreht, was jedoch keinen größeren Einfluss auf die Messung hat. Die Freiheit in z-Richtung ist notwendig, da der z-Abstand zwischen den ersten beiden Messungen einem Fehler unterliegt. Würde man diesen Parameter fixieren, wäre das System überbestimmt. Bei einem mechanischen System würde dies einer Verspannung entsprechen. Bei der vorliegenden Erfindung würde dies zu einer Verschlechterung der Konvergenz führen.

Insgesamt kann man sich die Fixierung des Koordinatensystems als eine Art Fest-Los-Lager aus der Mechanik vorstellen. Hier wird ebenfalls ein Freiheitsgrad am zweiten Lager nicht fixiert, um eine Verspannung beispielsweise durch thermische Dehnung zu verhindern. Anders als beim Fest-Los-Lager ist für das Koordinatensystem aber auch keine Rotation um die z-Achse gewünscht. Um diese Rotation zu verhindern, wird die insgesamt dritte Kugelposition (also die zweite der beiden weiteren Positionen), welche sich in x-Richtung weit außen im Prüfvolumen befindet, durch eine Nebenbedingung N6 in y-Richtung fixiert. Eine Fixierung erfolgt dabei jeweils durch eine Zuweisung eines festen Wertes für die jeweilige Koordinate in der jeweils angefahrenen Position.

Die Figur 2 stellt damit insgesamt die Fixierung des Koordinatensystems dar. Der Ursprung liegt in der ersten Kugelposition (Fixierung Translation in x, y, z durch N1 bis N3), rechts ist die dritte Kugelposition (Verhinderung einer Rotation um z durch N6) dargestellt. Hinten ist die zweite Kugelposition 2 (Verhinderung einer Rotation um x, y durch N4 und N5) dargestellt. Die Fixierungen sind durch die mit N1 bis N6 bezeichneten Pfeile angedeutet, welche die Position in diesen Richtungen festhalten. Im Ergebnis wird damit der Positionierungsfehler des Kalibrierobjektes an den Messpositionen in Richtung der Nebenbedingungen N1 bis N6 zu Null definiert. Das Koordinatensystem ist eindeutig definiert und nicht überbestimmt, so dass Positionierungsfehler keinen negativen Einfluss auf die Konvergenz der Kalibrierung haben.

In einem Ausführungsbeispiel zur Kalibrierung eines Interferometers weist das Verfahren die folgenden Schritte auf: Eine in einem Prüfvolumen angeordnete, optisch glatte Oberfläche wird mit wenigstens einer Objektwelle (Prüfwelle) beleuchtet und an der Oberfläche reflektierte Objektwellen werden mit einer zu einer oder mehreren Objektwellen kohärenten Referenzwelle auf dem Detektor zu einem Interferogramm überlagert. Zunächst werden alle möglichen Objektwellen, die in den Prüfvolumen gelangen, als Koeffizienten Q aufweisende Polynom-Funktionen der optischen Weglängen zwischen Lichtquelle und Quellenbezugsebene parametrisiert. Aus dem Prüfvolumen durch das gesamte Abbildungssystem auf genau einen Kamerapixel zulaufende Pixelwellen werden als Koeffizienten P aufweisende Polynom-Funktionen der optischen Weglängen zwischen Pixelbezugsebene und Detektor parametrisiert. Bei bekannten Koeffizienten P und Q wird für ein bekanntes Kalibrierobjekt im Prüfvolumen zu jeder Objektwelle die zu erwartende optische Weglänge von der Quelle bis zu jedem Punkt in einer Detektorebene berechnet. Dabei werden die Pixelwelle und die Quellenwelle Q für ein ideales Interferometer berechnet und es werden Abweichungen eines realen Interferometers vom idealen Interferometer, die sich auch durch abweichende Koeffizienten P und Q zeigen, quantifiziert.

Die Quantifizierung erfolgt dadurch, dass zunächst für eine oder mehrere bekannte Kalibrierobjekte eine Auswahl von Pixel-Quellen-Kombinationen gewählt werden, für jeden Koeffizienten P und Q der zugehörigen optischen Weglänge simuliert wird, wie sich infinitesimale Änderungen des jeweiligen Koeffizienten auf die optischen Weglängen der gewählten Pixel-Quellen-Kombinationen auswirken und diese Auswirkungen dann als charakteristische Weglängenänderungen des Koeffizienten gespeichert werden. Anschließend werden mit dem realen Interferometer die Abweichungen der optischen Weglängen gegenüber dem idealen Interferometer für die gewählten Pixel-Quellen-Kombinationen gemessen, und diese Abweichungen werden als Linearkombination der charakteristischen Weglängenänderungen der Koeffizienten in Form eines linearen Gleichungssystems dargestellt werden, das nach den Koeffizientenabweichungen aufgelöst wird. Die Koeffizientenabweichungen werden zu den Koeffizienten des idealen Interferometers addiert werden, um P und Q des realen Interferometers zu erhalten. Mit der Kenntnis der P und Q des realen Interferometers ist die Kalibrierung abgeschlossen.

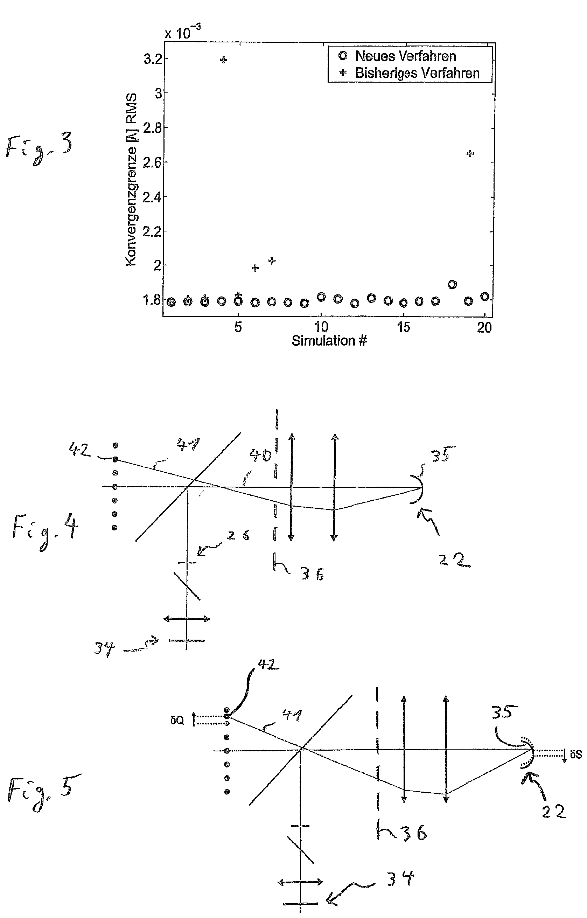

Figur 3 zeigt einen Vergleich des Konvergenzverhaltens einer erfindungsgemäßen Kalibrierung und einer bekannten Kalibrierung. Im Einzelnen zeigt die Figur 3 auf der Ordinate aufgetragene Werte einer Konvergenzgrenze in Vielfachen von Tausendsteln der Wellenlänge über dem indirekt längs der Abscisse aufgetragenen zufälligen Justagefehler als Ergebnis von Simulationen. Die längs der Abscisse aufgetragenen Zahlenwerte 0 bis 20 nummerieren die durchgeführten Simulationen. Dabei nimmt der zufällige Justagefehler von der Simulation #1, die einer fehlerfreien Positionierung entspricht, bis zur Simulation #20, bei der der Justagefehler etwa 30 Wellenlängen entspricht, linear zu. Die Kreise ergeben sich für die Erfindung, während die Kreuze das bekannte Verfahren repräsentieren. Man sieht, dass sich bei der Erfindung eine fast gleichbleibend kleine und damit insbesondere von der Größe des anfänglichen Justagefehlers fast unabhängige Genauigkeit (mittlere quadratische Abweichung RMS) der Kalibrierung von weniger als zwei tausendstel Wellenlängen als Konvergenzgrenze ergibt. Dagegen sind die Restfehler, die bei dem bekannten Verfahren auftreten, größer und streuen auch viel stärker. Dabei ist zu beachten, dass bei den fehlenden Datenpunkten gar keine Konvergenz erreicht werden konnte.

Das bedeutet, dass das Konvergenzverhalten, welches durch die neue Art der Definition des Koordinatensystems erreicht wird, deutlich besser ist als bei der bekannten Art der Kalibrierung.

Wie bereits weiter oben erwähnt wurde, ist der Einsatz dieser Art von Kalibrierung nicht auf das Tilted-Wave-Interferometer beschränkt. Es ist zum Bespiel auch möglich, ein herkömmliches Interferometer, das mit nur einer Quelle bzw. Prüfwelle arbeitet, auf diese Weise zu kalibrieren um z.B. schwache Asphären im Nicht-Nulltest zu messen.

Bei diesem Sonderfall reduziert sich die Komplexität der Polynombeschreibung für die Quellen: Es wird nur die Wellenfront der einen Quelle beschrieben. Ein weiterer Vorteil dieser Art von Kalibrierung ist die durch die Kenntnis der Retracefehler stark reduzierte Anforderung an die Positioniergenauigkeit bei der Messung. Wie weiter oben erwähnt, können mit der Erfindung andere Messgeräte, die ein Prüfvolumen besitzen und bei denen ein Koordinatensystem definiert werden muss, kalibriert werden.

Im Folgenden wird eine Ausgestaltung vorgestellt, mit der sich weitere Fehler kompensieren lassen, die auf einer anderen Fehlerquelle basiert: Diese andere Fehlerquelle besteht in einer linearen Abhängigkeit zwischen einer fehlerbehafteten Positionierung eines für die Kalibrierung verwendeten Messobjekts (Kalibrierobjekt) und Aberrationen des Interferometers von einem Idealzustand, die bei einem Interferometer grundsätzlich auftreten kann.

Durch eine Fehlpositionierung des Kalibrierobjekts in einer Messposition entstehen im Fall von Verschiebung in x- und/oder y-Richtung hauptsächlich Kippung sowie geringe Anteile von Termen höherer Ordnung. Im Fall einer Verschiebung in z-Richtung entsteht hauptsächlich Defokus, sowie geringe Anteile von hauptsächlich rotationssymmetrischen Termen höherer Ordnung. In beiden Fällen können diese Terme jedoch auch durch die Aberrationen des Interferometers erklärt werden, welche kalibriert werden sollen. Somit ist beim Betrachten einer einzelnen Messposition für den Algorithmus nicht unterscheidbar, welche der beiden Erklärungen, beziehungsweise welche der beiden möglichen Ursachen zutrifft, wodurch es nicht möglich ist, das System korrekt zu kalibrieren.

Bisher wurde diese lineare Abhängigkeit durch aberrationstheoretische Überlegungen zum Verlauf der verschiedenen Polynom-Terme im Feld gelöst. Es wurden für die Optimierung nur wenige Parameter freigegeben die nach der Theorie entstehen können. Der Nachteil dieser Lösung ist, dass die Kalibrierung mit eingeschränkten Parametern nur dann konvergiert, wenn alle optischen Komponenten extrem genau justiert sind, alle Komponenten perfekt sind, also keine Fehler in den Flächen enthalten sind, und außerdem insgesamt nur wenige Parameter in den Black-Boxes verwendet werden.

Dies hat mehrere Nachteile. Zum einen ist eine Justage, die eine solche Genauigkeit erfordert, sehr zeitaufwendig und erfordert sehr viel Erfahrung. Darüber hinaus können Aberrationen, die durch die vereinfachten Annahmen der Theorie nicht abgebildet werden, auch nicht kalibriert werden, wodurch die Konvergenz der Kalibrierung verschlechtert wird. Durch die Begrenzung auf einen insgesamt kleinen Parameterraum ist der Fitfehler in den Black-Box-Polynomen sehr hoch, was eine Kalibrierung mit interferometrischer Genauigkeit von einem Fünftel der Wellenlänge oder besser (d.h. mit Restabweichungen, die noch kleiner sind) verhindert.

Figur 4 zeigt zunächst den Verlauf eines Hauptstrahls 41 von einer Lichtquelle 42 über die Kalibrierkugel 35 zur Kamera 34. Unter einem Hauptstrahl wird dabei ein Stahl verstanden, der zentral durch die Blende 26 hindurch geht.

Die Figur 5 zeigt den Verlauf eines vergleichbaren Hauptstrahls 41 bei um $\delta Q$ verschobener Lichtquelle 42. Dadurch ergibt sich in der Quellenbezugsebene ein veränderter Strahlwinkel (Kippung). Figur 5 zeigt auch, dass dieser Fehler durch eine Verschiebung des Kalibrierobjekts 22 (Kalibrierkkugel) um $\delta S$ kompensiert werden kann, so dass der verkippte Strahl 41 ebenfalls wie der Hauptstrahl 41 in der Figur 5 zentral durch die Blende 26 hindurch geht. Das bedeutet, dass das Verfahren zunächst die beiden in den Figuren 4 und 5 dargestellten Stahlverläufe anhand der Messung nicht unterscheiden kann. Dies ist ein Beispiel für eine lineare Abhängigkeit zwischen der Kugelposition und dem Tilt-Term (der Kippung, dem Feldwinkel) einer Quelle. Anhand der Position des Hauptstrahls auf der Kamera, die eigentlich durch die Kippung definiert sein sollte, kann nicht zwischen den beiden Zuständen unterschieden werden.

Der ergänzende Lösungsansatz zum Beseitigen dieser Mehrdeutigkeit besteht darin, zusätzliche Messpositionen einzuführen. Diese werden so gewählt, dass auf einer Messung jeweils Information von mehreren Quellen enthalten ist, was durch Defokussieren, also durch eine Verschiebung des Kalibrierobjekts in z-Richtung (längs der optischen Achse 40) erreicht werden kann. In dieser Position sind die Kipp- und Defokus-Terme der beteiligten Quellen zueinander in Bezug gesetzt. Um das komplette Prüfvolumen abzudecken, werden mehrere solcher defokussierten Messpositionen benötigt, da aufgrund von Vignettierung (Abschattung von Messlicht an Komponenten des Aufbaus) nicht alle Quellen gleichzeitig in eine Messung integriert werden können. Die defokussierten Messpositionen werden so gewählt, dass alle Quellen Stück für Stück miteinander verknüpft werden. Das Ergebnis ist, dass die Positionierungsfehler nicht mehr linear abhängig von den Kalibrierparametern sind, da diese zwischen allen Kugelpositionen verknüpft sind.

Da auch die Kugelpositionen, welche für die Definition des Koordinatensystems benutzt werden, mit verknüpft werden, sind somit alle Positionen zum Koordinatensystem in Bezug gesetzt und weisen keine lineare Abhängigkeit zu Systemaberrationen mehr auf.

Zu diesem Zweck wird wenigstens ein Teil der bei der Kalibrierung verwendeten Kalibrierobjekte 22 und Messpositionen so vorbestimmt, dass ein in Wechselwirkung des Lichtes mehrerer Lichtquellen mit einem Kalibrierobjekt erzeugtes Messsignal des Flächendetektors 34 Beiträge mehrerer Lichtquellen aufweist, und dass die Messpositionen im Prüfvolumen Knotenpunkte eines gedachten, zusammenhängenden Graphen darstellen, der aus Knoten und Kanten besteht, wobei zwei Knotenpunkte genau dann durch eine gedachte Kante verbunden sind, wenn in den Messsignalen, die in den als Messpositionen dienenden zwei Knoten erzeugt werden, Beiträge aus wenigstens einer gemeinsamen Lichtquelle enthalten sind und außerdem jede Lichtquelle der Lichtquellen wenigstens einen Beitrag zu einem Messsignal liefert, und dass sich ein Messsignal des Flächendetektors, der mehrere Einzeldetektoren (z.B. Pixel eines CCD Chips) aufweist, aus Signalbeiträgen von mehreren Einzeldetektoren zusammensetzt, und dass die Messpositionen im Prüfvolumen Knotenpunkte eines gedachten, zusammenhängenden Graphen darstellen, der aus Knoten und Kanten besteht, wobei zwei Knotenpunkte genau dann durch eine gedachte Kante verbunden sind, wenn in den Messsignalen, die in den zwei Knoten erzeugt werden, Signalbeiträge aus wenigstens einem gemeinsamen Einzeldetektor enthalten sind und außerdem jeder Einzeldetektor des Flächendetektors wenigstens einen Beitrag zu einem Messsignal liefert.

Neben den oben beschriebenen Problemen existiert noch eine weitere Fehlerquelle bei der interferometrischen Vermessung eines Prüflings. Diese Fehlerquelle betrifft eine Art Skalierung des gesamten Prüfvolumens. Die Fehlerquelle besteht darin, dass zunächst nicht zwischen den folgenden beiden Zuständen unterschieden werden kann:
Ein erster Zustand zeichnet sich dadurch aus, dass die Kippung der Wellenfront aller Quellen in Richtung der optischen Achse, also der Winkel zwischen diesen Wellenfronten und der optischen Achse, von dem Sollwert der Kippung abweicht, und das Kalibrierobjekt bei allen Messungen entweder perfekt positioniert war (oder seine Position nur zufällig gestreut war, jedoch ohne linearen Fehler längs den Achsen der Positioniereinheit).

Ein zweiter Zustand zeichnet sich dadurch aus, dass die Kippung der Wellenfront aller Quellen in Richtung der optischen Achse dem Sollwert der Kippung entspricht, und das Kalibrierobjekt bei allen Messungen im Nulltest der Quellen um einen Betrag, welcher linear abhängig vom Abstand von der optischen Achse ist, in Richtung der optischen Achse verschoben war.

Im ersten Zustand 1 sind sowohl die Kalibrierpositionen im Nulltest als auch die defokussierten Messpositionen alle perfekt angefahren oder weisen nur eine zufällige Streuung auf. Im zweiten Zustand sind die Kalibrierpositionen im Nulltest skaliert. Sie weisen also einen Fehler auf, der zum Beispiel proportional zum Abstand von der optischen Achse ist.

In den defokussierten Kalibrierpositionen wird diese Skalierung durch eine Anpassung der Defokus- und Tilt-Parameter automatisch kompensiert und kann somit auch in diesen Messungen nicht erkannt werden. Dadurch ist es mit Hilfe der vorliegenden Kalibrierinformation nicht möglich, zwischen diesen beiden Zuständen zu unterscheiden. In einem realen System werden beide Zustände mit einer gewissen Häufigkeit vorkommen, weshalb es für eine erfolgreiche Kalibrierung notwendig ist, zwischen diesen beiden Zuständen unterscheiden zu können. Hierfür gab es bisher keine Lösung.

Eine Unterscheidung gelingt in der folgenden bevorzugten Ausgestaltung mit den folgenden Merkmalen:
Das Signal, welches es zulässt, zwischen dem genannten ersten Zustand und dem genannten zweiten Zustand zu unterscheiden, ist umso größer, je größer die Verschiebung zwischen den verschiedenen Kalibrierpositionen in z-Richtung ist und je größer die effektive Numerische Apertur (NA) der auswertbaren Messbereiche einer einzelnen Quelle ist. Wird das Kalibrierobjekt an einer Position stärker defokussiert, steigt zwar die Verschiebung in z-Richtung, jedoch nimmt gleichzeitig die effektive NA ab. Um das Problem zu lösen muss eine Möglichkeit gefunden werden, das Kalibrierobjekt möglichst weit zu verschieben, ohne die NA zu verringern. Dies kann dadurch erreicht werden, dass nicht nur eine Kalibrierkugel sondern mehrere (mindestens zwei) Kalibrierkugeln mit einer möglichst großen Radien-Differenz verwendet werden. Die weiteren Kugelpositionen werden dann an defokussierten Positionen, an denen mehrere Quellen sichtbar sind, vermessen und zusätzlich in die Kalibrieralgorithmen mit aufgenommen. Außerdem müssen in jeder Messung mindestens vier Mal vier Quellen sichtbar sein, da durch laterale Verschiebung die Kippung, also der lineare Term und durch Defokussieren der Fokus, also der quadratische Term eingestellt werden kann. Sind nur drei Messpunkte vorhanden, lässt sich die gemessene Funktion zweiten Grades immer durch Verschiebung in x, y und z erklären, was bei vier mal vier Messpunkten nicht mehr möglich ist. Das Signal wird umso besser, je mehr Quellen auf der Messung zu sehen sind. Im einfachsten Fall sind zwei unterschiedliche Radien nötig, um den Freiheitsgrad zu definieren. Da jedoch auch die Radien der Kalibrierkugeln zur Skalierung beitragen und diese nur mit endlicher Genauigkeit bestimmt werden können, empfiehlt es sich, für eine reale Kalibrierung mehr als nur zwei verschiedene Kugelradien zu verwenden, sodass sich der Fehler, der durch die falschen Radien entsteht, herausmittelt. Es ist auch möglich, die verschiedenen Kugelradien in einem diffraktiven Element zu realisieren, bei welchem unterschiedliche Beugungsordnungen genutzt werden.

**Patentansprüche**

1. Verfahren zur Kalibrierung eines Messgeräts (10) das zur Vermessung optisch glatter Flächen eingerichtet ist, mit den Schritten:

   - mit endlicher Genauigkeit und damit positionierfehlerbehaftet erfolgendes Anfahren von verschiedenen, in einem Prüfvolumen (24) des Messgerätes liegenden und durch Orts- und/oder Winkelkoordinaten auszeichnungsbaren Messpositionen,
   - Erzeugen von Messsignalen in den jeweiligen Messpositionen und
   - Bestimmen von Parametern eines Rechenmodells des Messgeräts aus den Messsignalen und den Orts- und/oder Winkelkoordinaten der Messpositionen, wobei das Rechenmodell eine Berechnung der zwischen mehreren Lichtquellen (13) und einem Detektor (34) liegenden optischen Weglänge für jeden möglichen Lichtstrahl (21) ermöglicht, der das Prüfvolumen (24) durchläuft und dabei an einem Kalibrierobjekt (22) reflektiert, gebeugt oder gebrochen wird,

   **dadurch gekennzeichnet, dass**

   - aus den positionierfehlerbehaftet angefahrenen Messpositionen ein Koordinatensystem für das Prüfvolumen (24) bestimmt wird, das durch sechs Nebenbedingungen (N1-N6) festgelegt wird, indem dem Koordinatensystem exakt sechs Koordinatenwerte von drei oder mehr positionierfehlerbehaftet angefahrenen Messpositionen zugewiesen werden,
   - für jede Lichtquelle (13) das Kalibrierobjekt (22) in zusätzlichen Messpositionen im Prüfvolumen (24) einmal im Nulltest positioniert wird und dann defokussiert positioniert wird,
   - wobei die defokussierten zusätzlichen Messpositionen derart gewählt sind, dass das Messsignal bei der Messung jeweils Information von mehreren Lichtquellen (13) enthält,
   - ein oder mehrere Kalibrierobjekte (22) verwendet werden, die gekrümmte Flächen mit unterschiedlich großen Krümmungsradien aufweisen oder diffraktive Optiken, die unterschiedliche Wellenfronten bilden.

2. Verfahren nach Anspruch 1,
   **dadurch gekennzeichnet, dass** die sechs Nebenbedingungen (N1-N6) derart bestimmt werden, dass

   - für eine erste Messposition, welche sich im Nulltest der Lichtquelle (13) bevorzugt auf der optischen Achse (40) befindet, die mit der z-Richtung des Koordinatensystems zusammenfällt, alle drei Translationen in x-, y- sowie z-Richtung durch drei der Nebenbedingungen (N1-N3) fixiert wird, indem den Koordinaten dieser Position jeweils ein definierter Wert zugewiesen wird, um den Ursprung des Koordinatensystems festzulegen,
   - für eine weitere, zweite Messposition, die gegenüber der ersten Messposition in z-Richtung verschoben ist, die Translationen in x- und y-Richtung durch zwei weitere der Nebenbedingungen (N4, N5) fixiert werden, um eine Rotation des Koordinatensystems um die x- und die y-Achse zu verhindern,
   - für eine weitere, dritte Messposition, die gegenüber der ersten Messposition in x-Richtung verschoben ist, die Translation in y-Richtung durch eine weitere der Nebenbedingungen (N6) fixiert wird, um eine Rotation des Koordinatensystems um die z-Achse zu verhindern.

3. Verfahren nach Anspruch 1 oder 2,
   **dadurch gekennzeichnet, dass** die defokussierten zusätzlichen Messpositionen so gewählt werden, dass alle Lichtquellen (13) Stück für Stück miteinander verknüpft werden.

4. Verfahren nach einem der vorhergehenden Ansprüche,
**dadurch gekennzeichnet, dass** die zusätzlichen Messpositionen des Kalibrierobjekts (22) so gewählt werden, dass das komplette Prüfvolumen (24) abgedeckt ist.

5. Verfahren nach Anspruch 4,
**dadurch gekennzeichnet, dass** in der Nulltest-Position die sich aus dem gesamten Prüfvolumen (24) ergebenden x- und y-Werte einer Quellenbezugsebene (36) komplett abgedeckt werden und dass in den defokussierten Messpositionen die sich aus dem gesamten Prüfvolumen (24) ergebenden x- und y-Werte einer Pixelbezugsebene (38) komplett abgedeckt werden.

6. Verfahren nach Anspruch 3 und nach Anspruch 4 oder 5,
**dadurch gekennzeichnet, dass** das Kalibrierobjekt (22) und die Messpositionen so vorbestimmt sind, dass ein in Wechselwirkung des Lichtes mehrerer Lichtquellen (13) mit dem Kalibrierobjekt (22) erzeugtes Messsignal eines Flächendetektors (34) Beiträge mehrerer Lichtquellen (13) aufweist,
dass außerdem jede Lichtquelle (13) wenigstens einen Beitrag zu einem der Messsignale liefert, und dass sich ein Messsignal des Flächendetektors (34), der mehrere Einzeldetektoren aufweist, aus Signalbeiträgen von mehreren Einzeldetektoren zusammensetzt,
und dass außerdem jeder Einzeldetektor des Flächendetektors (34) wenigstens einen Beitrag zu einem der Messsignale liefert.

7. Verfahren nach einem der vorhergehenden Ansprüche,
**dadurch gekennzeichnet, dass** in den defokussierten Messpositionen mindestens vier Mal vier Lichtquellen (13) sichtbar sind.

8. Verfahren nach einem der vorhergehenden Ansprüche,
**dadurch gekennzeichnet, dass** Kalibrierobjekte (22) mit nur zwei unterschiedlichen Krümmungsradien verwendet werden.

9. Verfahren nach einem der vorhergehenden Ansprüche,
**dadurch gekennzeichnet, dass** Kalibrierobjekte (22) mit mehr als zwei unterschiedlichen Krümmungsradien verwendet werden und dadurch ein Fehler, der durch Abweichungen der Krümmungsradien entsteht, herausgemittelt wird.

10. Verfahren nach einem der vorhergehenden Ansprüche,
**dadurch gekennzeichnet, dass** das Kalibrierobjekt (22) mehrere Kugeloberflächen mit unterschiedlichen Krümmungsradien aufweist und/oder als ein diffraktives Element realisiert ist, bei welchem unterschiedliche Beugungsordnungen genutzt werden.

11. Messgerät, das als Interferometer ausgeführt ist, mit einem Punktlichtquellenarray (12) aus Lichtquellen (13), einem Strahlteiler (14), einem Kollimator (16), einem Objektiv (18), einer Positioniereinheit (20) zum Verfahren eines Kalibrierobjekts (22) in einem Prüfvolumen (24) des Interferometers, einer Blende (26), einer Referenzlichtquelle (28), einem weiteren Strahlteiler (30), einer Abbildungsoptik (32) und einen Detektor (34) in Form einer lichtempfindliche Pixel aufweisenden Kamera, wobei das Messgerät dazu eingerichtet ist, ein Verfahren nach einem der vorhergehenden Ansprüche auszuführen.

## Claims

1. Method for calibrating a measuring device (10) which is configured for measuring optically smooth faces, with the steps:

   - moving with finite precision and hence positioning errors up to various measurement positions which lie in a test volume (24) of the measuring device and can be distinguished by location and/or angular coordinates,
   - production of measurement signals in the respective measurement positions, and
   - determination of parameters of a calculation model of the measuring device from the measurement signals and from the location and/or angular coordinates of the measurement positions, wherein the calculation model allows calculation of the optical travel length lying between several light sources (13) and a detector (34) for each possible light beam (21) which passes through the test volume (24) and is reflected, diffracted or refracted on a calibration object (22),

**characterised in that**

- from the measurement positions approached with positioning errors, a coordinate system for the test volume (24) is determined which is established by six secondary conditions (N1 - N6), wherein precisely six coordinate values of three or more measurement positions approached with positioning errors are assigned to the coordinate system,
- for each light source (13), the calibration object (22) is positioned in additional measurement positions in the test volume (24) once in the zero test and then positioned defocused,
- wherein the defocused additional measurement positions are selected such that on measurement, the measurement signal contains information from several light sources (13),
- one or more calibration objects (22) are used which have curved surfaces with different radii of curvature or diffractive optics which form different wave fronts.

2. Method according to claim 1, **characterized in that** the six secondary conditions (N1 - N6) are determined such that

- for a first measurement position which, in the zero test of the light source (13), is preferably situated on the optical axis (40) that coincides with the Z direction of the coordinate system, all three translations in the X, Y and Z direction are fixed by three of the secondary conditions (N1 - N3), wherein a respective defined value is assigned to the coordinates of this position in order to establish the origin of the coordinate system,
- for a further, second measurement position which is shifted in the Z direction relative to the first measurement position, the translations in the X and Y direction are fixed by two further secondary conditions (N4, N5) in order to prevent a rotation of the coordinate system about the X and Y axis,
- for a further, third measurement position which is shifted in the X direction relative to the first measurement position, the translation in the Y direction is fixed by a further secondary condition (N6) in order to prevent a rotation of the coordinate system about the Z axis.

3. Method according to claim 1 or 2, **characterised in that** the defocused additional measurement positions are selected such that all light sources (13) are linked together one by one.

4. Method according to any of the preceding claims, **characterised in that** the additional measurement positions of the calibration object (22) are selected such that the complete test volume (24) is covered.

5. Measurement according to claim 4, **characterised in that** in the zero test position, the X and Y values of a source reference plane (36) arising from the entire test volume (24) are completely covered and that in the defocused measurement positions, the X and Y values of a pixel reference plane (38) arising from the entire test volume (24) are completely covered.

6. Measurement according to claim 3 and according to claim 4 or 5, **characterised in that** the calibration object (22) and the measurement positions are predefined such that a measurement signal, which is produced on interaction of the light from several light sources (13) with the calibration object (22), of a planar detector (34) has contributions from several light sources (13),
that also each light source (13) makes at least one contribution to one of the measurement signals, and that a measurement signal of the planar detector (34) comprising several individual detectors is composed of signal contributions from several individual detectors,
and that also each individual detector of the planar detector (34) makes at least one contribution to one of the measurement signals.

7. Method according to any of the preceding claims, **characterised in that** at least four times four light sources (13) are visible in the defocused measurement positions.

8. Method according to any of the preceding claims, **characterised in that** calibration objects (22) with only two different radii of curvature are used.

9. Method according to any of the preceding claims, **characterised in that** calibration objects (22) with more than two different radii of curvature are used, and thereby an error resulting from deviations in the radii of curvature is averaged out.

**10.** Method according to any of the preceding claims, **characterised in that** the calibration object (22) comprises several spherical surfaces with different radii of curvature, and/or a diffractive element is realized in which different orders of diffraction are used.

**11.** Measurement device configured as an interferometer with a point light source array (12) of light sources (13), a beam splitter (14), a collimator (16), an objective lens (18), a positioning unit (20) for moving a calibration object (22) in a test volume (24) of the interferometer, a diaphragm (26), a reference light source (28), a further beam splitter (30), focusing optics (32), and a detector (34) in the form of a camera having light-sensitive pixels, wherein the measurement device is configured to perform a method according to any of the preceding claims.

**Revendications**

**1.** Procédé de calibrage d'un appareil de mesure (10) qui est agencé pour mesurer des surfaces optiquement lisses, comprenant les étapes consistant à :

- avec une précision finie et donc un accès entaché d'erreurs de positionnement à diverses positions de mesure situées dans un volume de contrôle (24) de l'appareil de mesure et caractérisables par des coordonnées de lieu et/ou d'angle,
- générer des signaux de mesure dans les positions de mesure respectives,
- déterminer des paramètres d'un modèle de calcul de l'appareil de mesure à partir des signaux de mesure et des coordonnées de lieu et/ou d'angle des positions de mesure, le modèle de calcul permettant un calcul de la longueur de chemin optique située entre plusieurs sources lumineuses (13) et un détecteur (34) pour chaque rayon lumineux possible (21) qui traverse le volume de contrôle (24) et est alors reflété, diffracté ou réfracté au niveau d'un objet de calibrage (22),

**caractérisé en ce que**

- à partir des positions de mesure dont l'accès est entaché d'erreurs de positionnement est déterminé, pour le volume de contrôle (24), un système de coordonnées qui est défini par six conditions secondaires (N1-N6), par le fait qu'au système de coordonnées sont attribuées exactement six valeurs de coordonnées de trois positions de mesure ou plus dont l'accès est entaché d'erreurs de positionnement,
- pour chaque source lumineuse (13), l'objet de calibrage (22) est positionné une fois en test nul dans des positions de mesure supplémentaires dans le volume de contrôle (24) et ensuite positionné de manière défocalisée,
- les positions de mesure supplémentaires défocalisées étant choisies de façon que, lors de la mesure, le signal de mesure contienne respectivement une information de plusieurs sources lumineuses (13),
- un ou plusieurs objets de calibrage (22) étant employés, lesquels présentent des surfaces incurvées avec des rayons de courbure de différentes grandeurs ou des optiques diffractives qui forment différents fronts d'ondes.

**2.** Procédé selon la revendication 1, **caractérisé en ce que** les six conditions secondaires (N1-N6) sont déterminées de façon que

- pour une première position de mesure qui, en test nul de la source lumineuse (13), se trouve préférentiellement sur l'axe optique (40) qui coïncide avec la direction z du système de coordonnées, les trois translations dans les directions x, y ainsi que z sont toutes fixées par trois des conditions secondaires (N1-N3), par le fait qu'aux coordonnées de cette position est respectivement attribuée une valeur définie afin de définir l'origine du système de coordonnées,
- pour une autre, deuxième, position de mesure qui est décalée dans la direction z par rapport à la première position de mesure, les translations dans les directions x et y sont fixées par deux autres des conditions secondaires (N4, N5) afin d'empêcher une rotation du système de coordonnées autour de l'axe x et de l'axe y,
- pour une autre, troisième, position de mesure qui est décalée dans la direction x par rapport à la première position de mesure, la translation dans la direction y est fixée par une autre des conditions secondaires (N6) afin d'empêcher une rotation du système de coordonnées autour de l'axe z.

**3.** Procédé selon la revendication 1 ou 2, **caractérisé en ce que** les positions de mesure supplémentaires défocalisées sont choisies de façon que toutes les sources lumineuses (13) soient liées entre elles une à une.

**4.** Procédé selon une des revendications précédentes, **caractérisé en ce que** les positions de mesure supplémentaires de l'objet de calibrage (22) sont choisies de façon que le volume de contrôle complet (24) soit couvert.

**5.** Procédé selon la revendication 4, **caractérisé en ce que** dans la position de test nul, les valeurs x et y d'un plan de référence de source (36) issues du volume de contrôle total (24) sont complètement couvertes et **en ce que** dans les positions de mesure défocalisées, les valeurs x et y d'un plan de référence de pixel (38) issues du volume de contrôle total (24) sont complètement couvertes.

**6.** Procédé selon la revendication 3 et selon la revendication 4 ou 5, **caractérisé en ce que** l'objet de calibrage (22) et les positions de mesure sont prédéterminés de façon qu'un signal de mesure d'un détecteur de surface (34) généré par interaction de la lumière de plusieurs sources lumineuses (13) avec l'objet de calibrage (22) comporte des contributions de plusieurs sources lumineuses (13), **en ce qu'**en outre, chaque source lumineuse (13) fournit au moins une contribution à un des signaux de mesure, et **en ce qu'**un signal de mesure du détecteur de surface (34), qui comporte plusieurs détecteurs individuels, se compose de contributions de signal de plusieurs détecteurs individuels, et **en ce qu'**en outre, chaque détecteur individuel du détecteur de surface (34) fournit au moins une contribution à un des signaux de mesure.

**7.** Procédé selon une des revendications précédentes, **caractérisé en ce que** dans les positions de mesure défocalisées, au moins quatre fois quatre sources lumineuses (13) sont visibles.

**8.** Procédé selon une des revendications précédentes, **caractérisé en ce que** des objets de calibrage (22) avec seulement deux rayons de courbure différents sont employés.

**9.** Procédé selon une des revendications précédentes, **caractérisé en ce que** des objets de calibrage (22) avec plus de deux rayons de courbure différents sont employés, ce qui permet de supprimer une erreur due à des écarts des rayons de courbure.

**10.** Procédé selon une des revendications précédentes, **caractérisé en ce que** l'objet de calibrage (22) comporte plusieurs surfaces sphériques avec différents rayons de courbure et/ou est réalisé sous la forme d'un élément diffractif pour lequel sont utilisés différents ordres de diffraction.

**11.** Appareil de mesure qui est conformé en interféromètre, comprenant un ensemble de sources lumineuses ponctuelles (12) composé de sources lumineuses (13), un séparateur de faisceau (14), un collimateur (16), un objectif (18), une unité de positionnement (20) pour déplacer un objet de calibrage (22) dans un volume de contrôle (24) de l'interféromètre, un obturateur (26), une source lumineuse de référence (28), un autre séparateur de faisceau (30), une optique de reproduction (32) et un autre détecteur (34) en forme de caméra comportant des pixels photosensibles, l'appareil de mesure étant agencé pour mettre en œuvre un procédé selon une des revendications précédentes.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006057606 B4
- WO 02084209 A1
- US 2005166413 A1


**In der Beschreibung aufgeführte Nicht-Patentliteratur**

- **J. LIESENER.** Zum Einsatz räumlicher Lichtmodulatoren in der interferometrischen Wellenfrontmesstechnik. Universität Stuttgart, 2006
- **E., JENSEN A.** Absolute Calibration Method for Twyman-Green Wavefront Testing Interferometers. *J. Opt. Soc. Am,* 1973, vol. 63, 1313A